# EUROPEAN PATENT APPLICATION

(11) **EP 4 810 918 A1**
(43) Date of publication of application: **23.09.2026**
(21) Application number: 26156651.7
(22) Date of filing: 05.02.2026
(51) Int. Cl.: G01C 23/00

(54) **APPARATUSES, COMPUTER-IMPLEMENTED METHODS, AND COMPUTER PROGRAM PRODUCTS FOR GENERATING DECELERATION DISPLAY FOR VEHICLE STOPPING OPERATIONS**

(30) Priority: 28.02.2025 US 202519067351
(71) Applicant: Honeywell International Inc., Charlotte, NC 28202 (US)
(72) Inventor: HE, Gang, Charlotte, 28202 (US)
(74) Representative: Haseltine Lake Kempner LLP

(57) **Abstract**

Embodiments of the disclosure provide for providing required and predicted deceleration for vehicle halting operations. In the context of a method, the method includes receiving location information for a stopping point for a vehicle. The method further includes determining a travel speed and a location of the vehicle and determining a current deceleration performance based on (i) the travel speed, (ii) the location, and (iii) vehicle deceleration capabilities of the vehicle. The method further includes predicting a required deceleration performance associated with stopping the vehicle at the intended stopping point. The method further includes generating display elements comprising (i) a first display element indicating the required deceleration performance, (ii) a second display element indicating the current deceleration performance, and (iii) a third display element indicating the vehicle deceleration capabilities relative to the required deceleration performance. The method further includes causing display of the display elements via an operator interface.

## Description

### TECHNOLOGICAL FIELD

Embodiments of the present disclosure are generally directed to systems and methods for determining and displaying required and predicted deceleration functions for vehicle approach and stopping operations.

### BACKGROUND

Electrical vertical take-off and landing (eVTOL) vehicles are a variety of vehicles that use electric power to hover, take off, and land vertically. In the eVTOL space, battery performance is a considerably limiting factor for vehicle performance, especially with respect to takeoff and landing functions. The takeoff and landing functions of such vehicles may be particularly power consuming; as such, it may be beneficial to enable an operator's awareness of a required performance to decelerate and land during operation, such that the operator may ensure that the vehicle can support the required functions under a current set of conditions.

Applicant has discovered various technical problems associated with displays and interfaces for enabling an operator to both perform and monitor deceleration operations. Through applied effort, ingenuity, and innovation, Applicant has solved many of these identified problems by developing the embodiments of the present disclosure, which are described in detail below.

### BRIEF SUMMARY

In accordance with a first aspect of the disclosure, a computer-implemented method for determining and displaying deceleration performance is provided. The computer-implemented method is executable utilizing any of a myriad of computing device(s) and/or combinations of hardware, software, firmware. In at least some embodiments, the computer-implemented method includes receiving location information corresponding to an intended stopping point for a vehicle. In at least some embodiments, the computer-implemented method includes determining a current travel speed and a current location of the vehicle. In at least some embodiments, the computer-implemented method includes determining a current deceleration performance based at least in part on (i) the current travel speed of the vehicle, (ii) the current location of the vehicle, and (iii) one or more vehicle deceleration capabilities corresponding to the vehicle. In at least some embodiments, the computer-implemented method includes predicting a required deceleration performance associated with stopping the vehicle at the intended stopping point. In at least some embodiments, the computer-implemented method includes generating a set of display elements comprising (i) a first display element indicating the required deceleration performance, (ii) a second display element indicating the current deceleration performance, and (iii) a third display element indicating the one or more vehicle deceleration capabilities relative to the required deceleration performance. In at least some embodiments, the computer-implemented method includes causing display of the set of display elements via an operator interface.

In at least some embodiments, the computer-implemented method further includes detecting that the required deceleration performance exceeds the one or more vehicle deceleration capabilities and, responsive to detecting that the required deceleration performance exceeds the one or more vehicle deceleration capabilities, generating one or more alerts. In at least some embodiments, the one or more alerts comprise an audio alert. In at least some embodiments, the one or more alerts comprise a visual alert.

In at least some embodiments, the computer-implemented method further includes automatically triggering one or more go-around functions responsive to detecting that the required deceleration performance exceeds the one or more vehicle deceleration capabilities.

In at least some embodiments, the set of display elements further comprises an element indicating a scale for indicating deceleration performance.

In at least some embodiments, the computer-implemented method further includes dynamically updating the set of display elements responsive to detecting a change in the current travel speed corresponding to the vehicle or the current deceleration performance.

In at least some embodiments, a computer system for determining and displaying deceleration performance is provided. The computer system in some embodiments includes at least one non-transitory computer-readable storage medium having computer program code stored thereon. The computer system in some embodiments includes at least one processor. The computer system is configured for performing, by the at least one processor, any one of the example computer-implemented methods described herein.

In accordance with another aspect of the present disclosure, a computer program product for determining and displaying deceleration performance is provided. The computer program product in some embodiments includes at least one non-transitory computer-readable storage medium having computer program code stored thereon. The computer program code in execution with at least one processor is configured for performing any one of the example computer-implemented methods described herein.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1 illustrates a block diagram of a networked environment that may be specially configured within which embodiments of the present disclosure may operate.
FIG. 2 illustrates a block diagram of an example apparatus that may be specially configured in accordance with at least some example embodiments of the present disclosure.
FIG. 3 illustrates an example human machine interface in accordance with at least some example embodiments of the present disclosure.
FIG. 4 illustrates an example human machine interface element in accordance with at least some example embodiments of the present disclosure.
FIG. 5 illustrates a flowchart depicting operations of an example process for in accordance with at least some example embodiments of the present invention.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### Overview

For electrical vertical take-off and landing (eVTOL) vehicles, minimum energy consumption modes are highly desired, particularly with respect to approach and landing operations, due to the limited battery capacity for these vehicles. Typically, eVTOL vehicles are to stay on wing lift as long as possible by flying at higher speed and then perform quick uniform deceleration to reach zero speed hover at a landing point. Existing display symbology does not provide direct indications for facilitating the operations and requires an operator to monitor the deceleration operation via various indirect information while performing the operation. A complementary display method in the pilot's primary field of view may be beneficial for enabling an operator to confirm adequate deceleration performance while performing the necessary operation(s).

Embodiments of the present disclosure provide a myriad of technical advantages in the technical field of operator interfaces for monitoring and conducting operations associated with necessary deceleration for stopping a vehicle. The methods, apparatuses, and computer program products determine and display detailed information about required deceleration performance as a meaningful complementary display, enabling an operator to readily compare required performance to current performance via available interfaces.

Embodiments of the present invention provide a usable, effective human-machine interface which ensures an operator can readily compare current deceleration performance metrics to required deceleration performance metrics. Providing an interface in this manner enables an operator to focus on a single display depicting both current deceleration and required deceleration, thereby enabling the operator to readily determine necessary operational changes.

### Definitions

"Vehicle" refers to any apparatus that traverses throughout an environment by any mean of travel. In some contexts, a vehicle transports goods, persons, and/or the like, or traverses itself throughout an environment for any other purpose, by means of air, sea, or land. In some embodiments, a vehicle is ground-based, air-based, water-based, space-based (e.g., outer space or within an orbit of a planetary body, a natural satellite, or artificial satellite), and/or the like. In some embodiments, the vehicle is an aerial vehicle capable of air travel. Non-limiting examples of aerial vehicles include urban air mobility vehicles, drones, helicopters, fully autonomous air vehicles, semi-autonomous air vehicles, airplanes, orbital craft, spacecraft, and/or the like. In some embodiments, the vehicle is piloted by a human operator onboard the vehicle. For example, in an aerial context, the vehicle may be a commercial airliner operated by a flight crew. In some embodiments, the vehicle is remotely controllable such that a remote operator may initiate and direct movement of the vehicle. Additionally, in some embodiments, the vehicle is unmanned. For example, the vehicle may be a powered, aerial vehicle that does not carry a human operator and is piloted by a remote operator using a control station. In some embodiments, the vehicle is an aquatic vehicle capable of surface or subsurface travel through and/or atop a liquid medium (e.g., water, water-ammonia solution, other water mixtures, and/or the like). Non-limiting examples of aquatic vehicles include unmanned underwater vehicles (UUVs), surface watercraft (e.g., boats, jet skis, and/or the like), amphibious watercraft, hovercraft, hydrofoil craft, and/or the like. As used herein, vehicle may refer to vehicles associated with advanced air mobility (AAM).

"AAM" refers to advanced air mobility, which includes all aerial vehicles and functions for aerial vehicles that are capable of performing vertical takeoff and/or vertical landing procedures. Non-limiting examples of AAM aerial vehicles include passenger transport vehicles, cargo transport vehicles, small package delivery vehicles, unmanned aerial system services, autonomous drone vehicles, and ground-piloted drone vehicles, where any such vehicle is capable of performing vertical takeoff and/or vertical landing.

"eVTOL" vehicles refer to electric vertical take-off and landing aircraft, which includes aerial vehicles that are powered by batteries and configured to hover and fly. Non-limiting examples of eVTOL vehicles include air taxis and flying taxis, which hover and fly similarly to a helicopter, and may be designed to carry a small number of passengers and a pilot.

### Example Systems and Apparatuses of the Disclosure

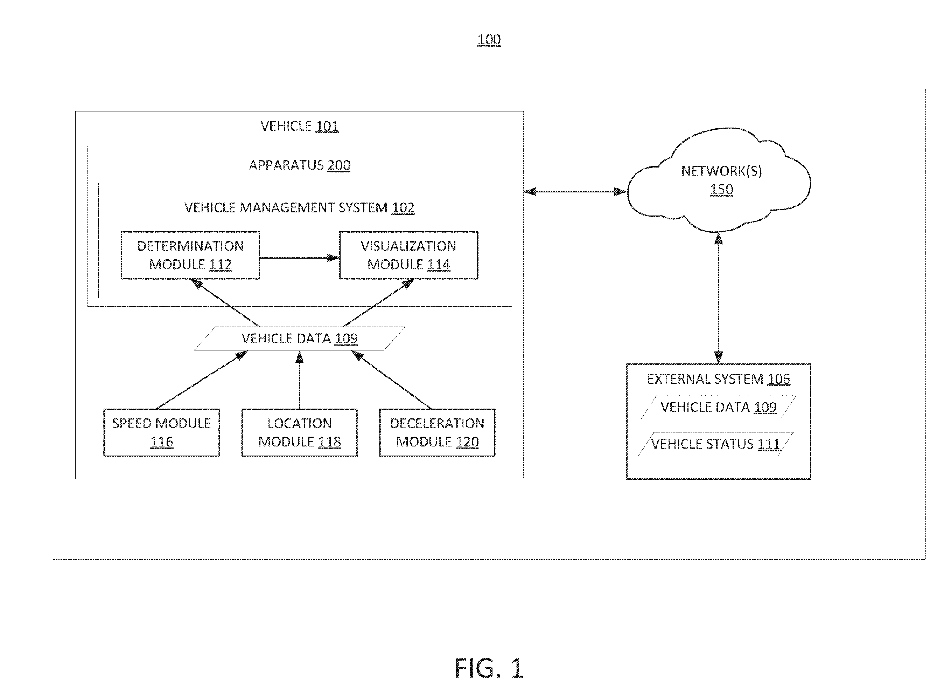

FIG. 1 illustrates a block diagram of a network environment that may be specially configured within which embodiments of the present disclosure may operate. Specifically, FIG. 1 depicts an example networked environment 100. As illustrated, the networked environment 100 includes one or more vehicles 101 and one or more external systems 106. Components of networked environment 100 may be configured to communicate via network(s) 150 as depicted.

In various embodiments, the one or more vehicles 101 includes a passenger portion configured to accommodate one or more passengers. For example, the one or more vehicles 101 may include a seating area, cabin, deck, and/or the like that is allocated for holding passengers. In some embodiments, the passenger portion includes one or more computing devices configured to output media elements to one or more passengers. In some embodiments, the computing devices may be handheld devices, seat-mounted devices, wall-mounted devices, ceiling-mounted devices, window-mounted devices, passenger or operator wearable devices, and/or the like. In various embodiments, a computing device may include mobile devices, smartphones, tablets, phablets, kiosks, smart displays, speakers, Internet of Things (IoT) devices, smart appliances, and/or the like. The one or more vehicles 101 may include multiple different computing devices configured to provide various formats of media elements, such as audible media, visual media, tactile media, and/or the like.

In some embodiments, the one or more vehicles 101 include a vehicle management system 102 configured to generate or obtain vehicle data 109 that is indicative of operation of the one or more vehicles 101. The vehicle management system 102 may include any number of computing device(s) and/or other system(s) embodied in hardware, software, firmware, and/or the like. For example, the vehicle management system 102 may include one or more vehicle controls (e.g., rotor speed, rotor orientation, thrust, brakes, flaps, and/or the like). In some embodiments, the vehicle management system 102 includes an autopilot and/or the like that automatically controls the vehicle 101. The autopilot may be embodied in firmware, software, hardware, and/or the like such that the vehicle management system 102 may autonomously navigate the vehicle 101. Additionally, or alternatively, in some embodiments, the vehicle management system 102 is configured to execute control commands received from a remote computing environment.

In some embodiments, the vehicle management system 102 includes a determination module 112 and a visualization module 114. Determination module 112 may be configured to determine a plurality of vehicle performance/vehicle status metrics. Determination module 112 may be configured to receive data from one or more vehicle recording systems configured to obtain and report one or more aspects of the vehicle or operation thereof. As depicted, determination module 112 may be configured to receive vehicle data 109 via speed module 116, location module 118, and deceleration module 120. Though depicted separately from vehicle management system 102 and apparatus 200, it should be appreciated that any number of modules configured to provide vehicle data 109 (such as speed module 116, location module 118, and deceleration module 120, for example, may be embodied in any number of shared and/or independent systems. the vehicle management system 102 may include a transponder, data uplink system, traffic collision avoidance system (TCAS), automatic dependent surveillance-broadcast (ADS-B), flight recorder, and/or the like.

In some embodiments, the vehicle management system 102 is configured to receive vehicle data 109 from one or more external systems. In some embodiments, the vehicle management system 102 includes or is in communication with one or more sensors of the vehicle 101. For example, the vehicle management system 102 may include or communicate with image sensors, pressure sensors, temperature sensors, audio sensors, accelerometers, gyroscopes, magnetometers, inertial measurement units, and/or the like. In various embodiments, the vehicle management system 102 includes one or more sensors, systems, and/or the like configured to determine a physical position of the vehicle 101. For example, the vehicle management system 102 may include one or more satellite-based positioning systems configured to generate a geographic orientation of a vehicle, such as a GPS module. Location module 118 may include such a GPS module, and may be embodied as a part of vehicle management system 102 or separately from the vehicle management system 102 as depicted. Deceleration module 120 may be configured to receive and/or determine one or more deceleration capabilities of the subject vehicle. In at least some embodiments, deceleration module 120 receives/identifies one or more vehicle capabilities which inform or otherwise impact a vehicle's ability to decelerate. For example, deceleration module 120 may be configured to determine, based on a vehicle's hardware/ current specifications, a maximum deceleration the vehicle can achieve based on a current set of conditions.

In at least some embodiments, determination module 112 is configured to process vehicle data 109 to determine (i) a current deceleration performance, and (ii) a predicted deceleration performance with respect to the vehicle 101 and a selected stopping point. Factors processed by the determination module 112 may include vehicle speed, distance to a stopping point, vehicular momentum, vehicle weight, vehicle deceleration capabilities, planned path to the stop point such as a straight line or curve, and the like. Additionally, one or more travel conditions (such as weather, for example) may be additionally processed to determine a vehicle's deceleration. In general, determination module 112 may be configured to process a current set of conditions to determine current deceleration capabilities corresponding to the vehicle 101 and an intended stopping point. For example, the current deceleration capabilities may be informed according to the vehicle's current deceleration, speed, the vehicle's hardware capabilities pertaining to deceleration, and one or more current external conditions (such as weather conditions wind, for example). Determination module 112 may additionally be configured to determine predicted deceleration performance based at least in part on real-time measured vehicle performance, expected conditions and performance capabilities. In at least some embodiments, determination module 112 is configured to determine a required deceleration performance to enable stopping at a desired stopping point.

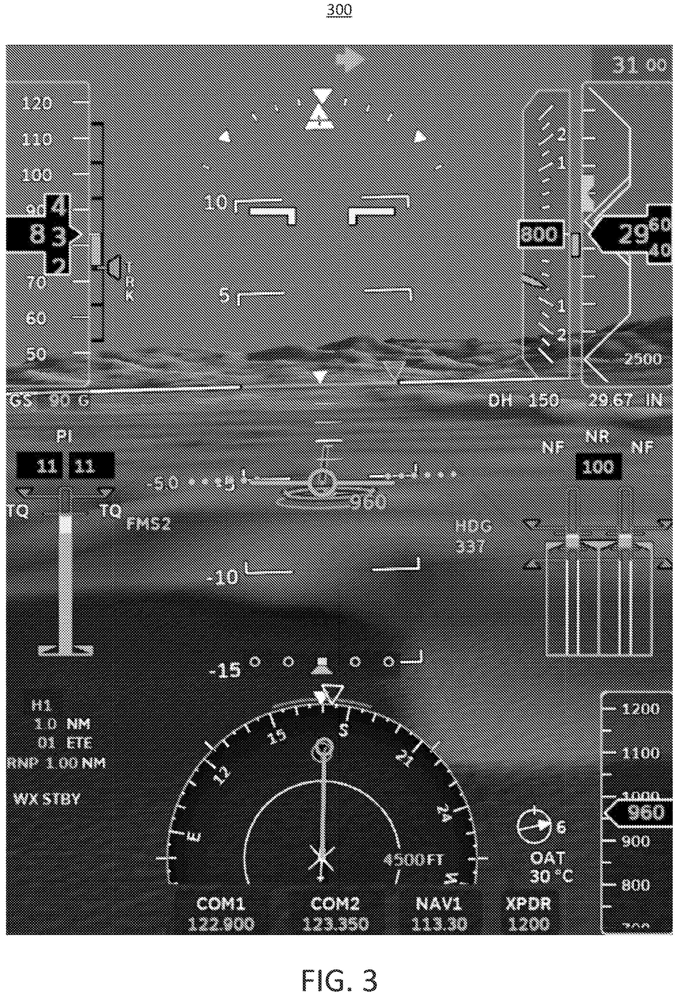

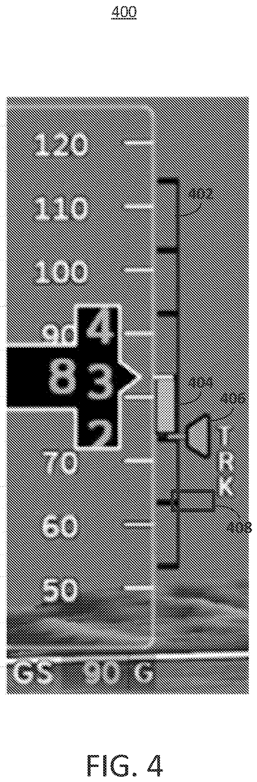

Visualization module 114 may be configured to generate a visualization corresponding to the current deceleration performance and/or the predicted deceleration performance. In at least some embodiments, visualization module 114 is configured to update an existing vehicle display/interface to include a deceleration indicator. An example of an interface display updated to include a deceleration element is depicted with respect to Fig. 3. An example interface element depicting various deceleration benchmarks is depicted and described with respect to Fig. 4.

In various embodiments, the external system 106 includes any system that is external to the vehicle 101 and configured to generate vehicle data 109 indicative of operation of the vehicle 101. For example, the external system 106 may include radar systems, weather alert systems, vehicle traffic systems, ground stations, other vehicles 101, and/or the like, that are located outside of the vehicle 101. In some embodiments, the external system 106 is configured to provision vehicle data 109 to vehicle management system 102. For example, the external system 106 may provision weather reports, vehicle traffic reports, location-specific information, and/or the like to vehicle management system 102.

In some embodiments, a vehicle status 111 includes a physical location of the vehicle 101, a proximity of the vehicle 101 to one or more physical locations (e.g., destinations, points of interest (POIs), and/or the like), a proximity of the vehicle 101 to other vehicles, and/or the like. In some embodiments, a vehicle status 111 includes a phase or progression of the vehicle 101 along a travel pathway. For example, the vehicle status 111 may include taxi, takeoff, ascent, cruising, pre-descent, descent, landing, arrival, and/or the like. In some embodiments, a vehicle status 111 includes presence of turbulence conditions or the forecasting of turbulent conditions (e.g., wind shear, mechanical turbulence, thermal turbulence, frontal turbulence, and/or the like). Additionally, or alternatively, a vehicle status 111 includes present or forecasted weather (e.g., winds, precipitation, temperature, fog, smog, dust), and/or the like. Vehicle status 111 may be used to inform, for example, vehicle deceleration capabilities as described herein. In at least some embodiments, vehicle status 111 may be generated by a component internal to vehicle 101, such as apparatus 200 or vehicle management system 102.

In some embodiments, vehicle management system 102 includes an apparatus 200. In some embodiments, the apparatus 200 includes one or more displays on which graphical user interfaces (GUIs), human-machine interfaces (HMIs), and other information related to vehicle operation, mission operation, and/or the like, may be rendered. In some embodiments, the display(s) includes a CRT (cathode ray tube), LCD (liquid crystal display) monitor, LED (light-emitting diode) monitor, and/or the like, for displaying information/data to an operator. In some embodiments, the apparatus 200 includes one or more input devices for receiving user inputs. The input device(s) may include any number of devices that enable human-machine interface (HMI) between an operator of the vehicle and the vehicle management system 102. In some embodiments, the input device includes one or more buttons, cursor devices, joysticks, touch screens, including three-dimensional or pressure-based touch screens, camera, finger-print scanners, accelerometer, retinal scanner, gyroscope, magnetometer, or other input devices. In some embodiments, the input device 123 includes one or more vehicle controls (e.g., joysticks, thumbsticks, yokes, steering wheels, accelerator control, thrust control, brake control, and/or the like) that enable an operator to control and issue instructions to the one or more vehicles 101.

Each of the components of the system communicatively coupled to transmit data to and/or receive data from one another over the same or different wireless or wired networks embodying the communications network 150. Such configuration(s) include, without limitation, a wired or wireless Personal Area Network (PAN), Local Area Network (LAN), Metropolitan Area Network (MAN), Wide Area Network (WAN), satellite network, radio network, and/or the like. Additionally, while FIG. 1 illustrate certain system entities as separate, standalone entities communicating over the communications network 150, the various embodiments are not limited to this particular architecture. In other embodiments, one or more computing entities share one or more components, hardware, and/or the like, or otherwise are embodied by a single computing device such that connection(s) between the computing entities are over the communications network 150 are altered and/or rendered unnecessary.

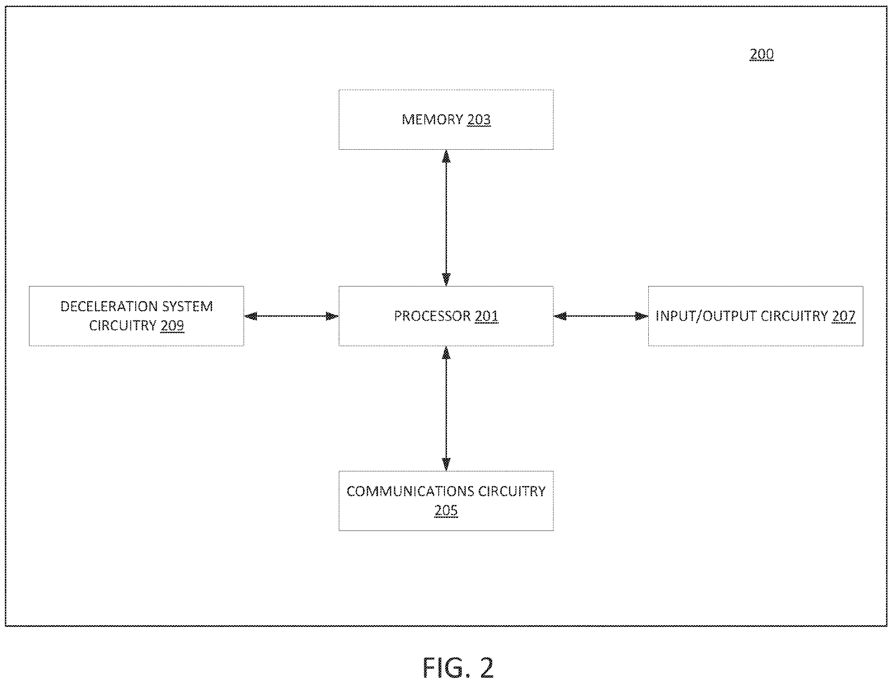

FIG. 2 illustrates a block diagram of an example apparatus 200 that may be specially configured in accordance with at least some example embodiments of the present disclosure. The apparatus 200 may carry out functionality and processes described herein to enable an operator to monitor and control vehicle deceleration operations/metrics simultaneously. In some embodiments, the apparatus 200 includes a processor 201, memory 203, communications circuitry 205, input/output circuitry 207, and deceleration system circuitry 209. In some embodiments, the apparatus 200 is configured, using one or more of the processor 201, memory 203, communications circuitry 205, input/output circuitry 207, and/or deceleration system circuitry 209, to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, controlling, modifying, outputting, restoring, processing, displaying, storing, determining, creating/generating, predicting, monitoring, evaluating, comparing, and/or similar terms used herein interchangeably. In one embodiment, these functions, operations, and/or processes may be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Additionally, or alternatively, in some embodiments, other elements of the apparatus 200 provide or supplement the functionality of another particular set of circuitry. For example, the processor 201 in some embodiments provides processing functionality to any of the sets of circuitry, the memory 203 provides storage functionality to any of the sets of circuitry, the communications circuitry 205 provides network interface functionality to any of the sets of circuitry, and/or the like.

In some embodiments, the processor 201 (and/or co-processor or any other processing circuitry assisting or otherwise associated with the processor) is/are in communication with the memory 203 via a bus for passing information among components of the apparatus 200. In some embodiments, for example, the memory 203 is non-transitory and may include, for example, one or more volatile and/or non-volatile memories. In other words, for example, the memory 203 in some embodiments includes or embodies an electronic storage device (e.g., a computer readable storage medium). In some embodiments, the memory 203 is configured to store information, data, content, applications, instructions, or the like, for enabling the apparatus 200 to carry out various functions in accordance with example embodiments of the present disclosure (e.g., generating display components, enabling user interactions, and/or the like).

The processor 201 may be embodied in a number of different ways. For example, in some embodiments, the processor 201 includes one or more processing devices configured to perform independently. Additionally, or alternatively, in some embodiments, the processor 201 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the apparatus 200, and/or one or more remote or "cloud" processor(s) external to the apparatus 200.

In an example embodiment, the processor 201 is configured to execute instructions stored in the memory 203 or otherwise accessible to the processor. Additionally, or alternatively, the processor 201 in some embodiments is configured to execute hard-coded functionality. As such, whether configured by hardware or software methods, or by a combination thereof, the processor 201 represents an entity (e.g., physically embodied in circuitry) capable of performing operations according to an embodiment of the present disclosure while configured accordingly. Additionally, or alternatively, as another example in some example embodiments, when the processor 201 is embodied as an executor of software instructions, the instructions specifically configure the processor 201 to perform the algorithms embodied in the specific operations described herein when such instructions are executed.

As one particular example embodiment, the processor 201 is configured to perform various operations associated with providing an interface and conducting operations associated with determining and displaying vehicle deceleration metrics and measurements. In some embodiments, the processor 201 includes hardware, software, firmware, and/or the like, that obtain vehicle data from vehicle management systems 102, external systems 106, and/or the like. For example, the processor 201 may obtain vehicle statuses from one or more vehicle management systems 102 configured to generate or measure vehicle speed, location, acceleration, health, and/or the like.

In some embodiments, the apparatus 200 includes input/output circuitry 207 that provides output to a user and, in some embodiments, receives an indication of a user input. In various embodiments, the user is an operator of a vehicle 101, where the operator may be aboard or remote from the vehicle 101. For example, in some contexts, the input/output circuitry 207 provides output to and receives input from one or more operator computing devices, ground station operators, and/or the like. In some embodiments, the input/output circuitry 207 is in communication with the processor 201 to provide such functionality. The input/output circuitry 207 may comprise one or more user interface(s) and in some embodiments includes a display that comprises the interface(s) rendered as a web user interface, an application user interface, a user device, a backend system, or the like. In some embodiments, the input/output circuitry 207 also includes a keyboard, a mouse, a joystick, vehicle controls (e.g., steering, power, braking, and/or the like), a touch screen, touch areas, soft keys a microphone, a speaker, and/or other input/output mechanisms. The processor 201 and/or input/output circuitry 207 comprising the processor may be configured to control one or more functions of one or more user interface elements through computer program instructions (e.g., software and/or firmware) stored on a memory accessible to the processor 201 (e.g., memory 203, and/or the like). In some embodiments, the input/output circuitry 207 includes or utilizes a user-facing application to provide input/output functionality to a display of an operator computing device, passenger computing device, and/or the like.

In some embodiments, the apparatus 200 includes communications circuitry 205. The communications circuitry 205 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 205 includes, for example, a network interface for enabling communications with a wired or wireless communications network, such as the network 150 shown in FIG. 1 and described herein. Additionally, or alternatively in some embodiments, the communications circuitry 205 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 205 includes circuitry for interacting with the antenna(s) and/or other hardware or software to cause transmission of signals via the antenna(s) or to handle receipt of signals received via the antenna(s). In some embodiments, the communications circuitry 205 enables transmission to and/or receipt of data from vehicle management systems 102, computing devices 105, and external systems 106 in communication with the apparatus 200. For example, the communications circuitry 205 may enable receipt of operator commands from a computing device 105.

The deceleration system circuitry 209 includes hardware, software, firmware, and/or a combination thereof, that carry out processes for providing conditional guidance to passengers based at least in part on vehicle data. For example, in some contexts, the deceleration system circuitry 209 includes hardware, software, firmware, and/or the like, that process vehicle data 109 to determine corresponding mission data/mission information. In some embodiments, the deceleration system circuitry 209 includes a separate processor, specially configured field programmable gate array (FPGA), and/or a specially programmed application specific integrated circuit (ASIC).

Additionally, or alternatively, in some embodiments, two or more of the processor 201, memory 203, communications circuitry 205, input/output circuitry 207, and/or deceleration system circuitry 209 are combinable. Additionally, or alternatively, in some embodiments, one or more of the sets of circuitry perform some or all of the functionality described associated with another component. For example, in some embodiments, two or more of the sets of circuitry 201-209 are combined into a single module embodied in hardware, software, firmware, and/or a combination thereof. Similarly, in some embodiments, one or more of the sets of circuitry, for example the memory 203, communication circuitry 205, and/or deceleration system circuitry 209 is/are combined with the processor 201, such that the processor 201 performs one or more of the operations described above with respect to each of these sets of circuitry 203-209.

### Example Human Machine Interfaces (HMIs) and Displays of the Disclosure

Having described example systems and apparatuses in accordance with the disclosure, example human machine interfaces and displays will now be discussed. It will be appreciated that each HMI depicts an example interface usable with respect to the apparatuses, systems, devices, and/or computer program products described herein, for example utilizing one or more of the specially configured components thereof. It should be appreciated that, though the example HMI/display implementations are described with respect to various embodiments directed towards vehicles configured for aerial travel, additional embodiments and corresponding interfaces exist for vehicles configured for land or water travel. Further, it should be appreciated that, though the embodiments described with respect to FIG. 3 and FIG. 4 describe human-machine interfaces for displaying the deceleration performance information as described herein, other embodiments exist wherein such information is displayed via display devices configured without components providing user interactable elements.

FIG. 3 illustrates an example human machine interface 300 in accordance with at least some example embodiments of the present disclosure. As depicted, HMI 300 depicts an example interface configured for display to an operator of a subject vehicle. HMI 300 is configured to display a plurality of current operational metrics corresponding to the subject vehicle. It should be appreciated that HMI 300 depicts a single example of an appropriate interface for displaying current travel metrics associated with a vehicle's current operation, and many variations of the interface may be appropriate. In general, HMI 300 depicts one method of display for a plurality of vehicle metrics. Many interface components, both included and not depicted, are described below with respect to HMI 300. It should be appreciated that, though the elements of HMI 300 are depicted as customizable digital display components, many appropriate interfaces can include a combination of any number of digital elements, analog displays, and the like.

In at least some embodiments, HMI 300 includes an attitude indicator (or an artificial horizon). The attitude indicator may be configured to show a vehicle's pitch and bank, thereby enabling an operator to maintain a desired altitude and heading. In particular, the attitude indicator provides a stable reference point when an operator cannot see the horizon due to poor weather conditions, for example. Generally, the attitude indicator is a miniature replica of the horizon, allowing an operator to orient themselves and adjust a vehicle's attitude.

In at least some embodiments, HMI 300 includes an airspeed indicator. The airspeed indicator is configured to show a vehicle's current speed, and may be displayed in knots, kilometers per hour, or miles per hour, for example. The airspeed indicator enables an operator to maintain a safe speed during various vehicular operations, such as takeoff, landing, flight, and the like.

In at least some embodiments, HMI 300 includes an altimeter. The altimeter may be configured to show a vehicle's current altitude, reflecting how far above ground a vehicle is.

In at least some embodiments, HMI 300 includes a vertical speed indicator (VSI) shows a vehicle's rate of climb or rate of descent. The vertical speed indicator may be referred to as a rate-of-climb indicator, and reflects a vehicle's rate of vertical delta in feet (or meters) per minute, or more commonly hundreds of feet (or meters) per minute, for example. Generally, the VSI enables an operator to change a vehicle's altitude at a steady pace.

In at least some embodiments, HMI 300 includes a heading indicator (HI) configured to display a vehicle's current heading in degrees. Operators may be required to maintain a steady heading during travel, notably when navigating busy airspace or following specific travel plans, for example. A heading indicator may also be known as a direction indicator (DI) and, less commonly, a directional gyro (DG).

In at least some embodiments, HMI 300 includes a turn coordinator configured to depict how quickly a vehicle is turning. A turn coordinator may have a gyroscope configured to detect movement, along with a ball inside a curved tube configured to measure the smoothness of a turn. When the vehicle turns, the gyroscope moves, and a miniature representation of the vehicle moves according to how quickly the vehicle is turning. Presenting this information to an operator enables consistent turning and prevents sliding/slipping, leading to safer travel.

In at least some embodiments, HMI 300 includes a course deviation indicator (CDI) configured to display position relative to a desired course. The CDI may be configured to display a vehicle's position relative to a desired course; a needle of the CDI moves left or right depending on the position of the vehicle. The needle's deflection from center indicates how far off course the vehicle is.

In at least some embodiments, HMI 300 includes a horizontal situation indicator (HIS) configured to combine a heading indicator (HI) and a course deviation indicator (CDI) into a single instrument. In at least some embodiments, an HIS is configured to provide critical navigation information by showing a vehicle's current heading and a desired course. An integrated CDI provides information about a vehicle's position relative to a desired course, displaying deviations as either left or right of a course line. The HIS may be configured to enable a pilot to make minor corrections to stay on course, especially during approaches and departures, for example. Some HIS instruments incorporate a glide scope indicator, which is configured to provide vertical guidance upon approach.

In at least some embodiments, HMI 300 includes a radar altimeter. A radar altimeter is configured to use radio waves to measure the distance between a vehicle and the ground. The radar altimeter plays an important role during landing, as it enables an operator to have an accurate reading of a vehicle's height above ground even amidst low visibility, for example.

In at least some embodiments, HMI 300 includes distance measuring equipment (DME). Distance measuring equipment provides a pilot with distance information between a vehicle and an offboard navigation aid.

In at least some embodiments, HMI 300 includes an angle of attack (AoA) indicator. The AoA indicator is configured to provide a visual indication of the vehicle's angle of attack, allowing an operator to adjust their pitch to avoid stalling, for example.

In at least some embodiments, HMI 300 includes an outside air temperature (OAT) gauge. The OAT gauge is configured to display an outside air temperature to an operator. Outside air temperature is a critical element in determining performance factors and also determining a risk of icing, which can greatly impact vehicle performance.

In at least some embodiments, HMI 300 includes a wind meter. The wind meter is configured to display a direction and a speed corresponding to current wind conditions.

It should be appreciated that, with respect to each of the components described above, the systems which provide the data corresponding to each described component may additionally communicate the data to one or more modules responsible for calculating and visualizing one or more deceleration metrics/components, via a deceleration element.

FIG. 4 illustrates an example human machine interface element 400 in accordance with at least some example embodiments of the present disclosure. As depicted, HMI element 400 includes deceleration performance scale 402, predicted deceleration performance indicator 404, required deceleration performance indicator 406, and system deceleration performance limitations 408. HMI element 400 may be a generated interface element displayed as an overlay to an operator interface, such as is depicted and described with respect to FIG. 3.

Deceleration performance scale 402 may be a meter, scale, dial, or other continuum display configured to depict various deceleration performance benchmarks and/or measurements. As depicted, deceleration performance scale 402 is configured to display values corresponding to a predicted deceleration performance, a required deceleration performance, and a system deceleration performance limitation. In general, deceleration performance scale 402 is a visual indicator configured to depict pertinent metrics associated with notable deceleration benchmarks, measurements, capabilities, and/or limitations.

Predicted deceleration performance indicator 404 may be configured to display a predicted deceleration performance corresponding to the vehicle based at least in part on (i) a set of current vehicle operating conditions, (ii) a set of current external conditions, and (iii) any deceleration limitations/capabilities of the vehicle. In at least some embodiments, predicted deceleration performance indicator 404 is configured to display a range corresponding to a predicted deceleration performance. The predicted deceleration performance range may be calculated by incorporating a defined margin of error (10%, 5%, etc.) into the determined predicted deceleration performance by depicting the range to include values within the margin of error both above and below the determined predicted deceleration performance. In at least some embodiments, the corresponding margin of error may be calibrated according to a set of current conditions; for example, a predicted deceleration performance range corresponding to a vehicle operating under suboptimal weather conditions may be assigned a larger margin of error than the same vehicle would be assigned under normal weather conditions. Similarly, an older (or otherwise less reliable) vehicle may be assigned a larger margin of error than a newer vehicle. Similarly, the predicted deceleration performance may be adjusted based on the planned path such as a curved approach path, where adjustment is made based on curve shape and path length. In some cases, predicted deceleration can be heavily or entirely weighted toward currently measured vehicle performance.

Required deceleration performance indicator 406 may be configured to indicate a required deceleration performance to reach an intended stopping point. In at least some embodiments, required deceleration performance indicator 406 is configured to (i) determine a distance from the vehicle's current location to a stopping point location, (ii) determine a current travel speed of the vehicle, and (iii) determine a required deceleration performance for the vehicle to stop by the stopping point location. In at least some embodiments, such as those where uniform deceleration is desired, the required deceleration performance for the vehicle is determined as an average across the estimated remaining distance to the stopping point. In other embodiments, such as those where deceleration to a defined slower speed before reaching a point prior to the stopping point is required, deceleration is determined as an average across the remaining distance to that predefined point, after which a secondary required deceleration may be required. Such an embodiment may be beneficial in environments wherein the last section of a vehicle's travel occurs in a congested area, for example, and therefore decreasing speed to a considerably slowed rate prior to the stopping point may be prudent. In addition, required deceleration performance may be modified by planned or real-time determined path to the stop point.

System deceleration performance limitations indicator 408 may be an indicator configured to depict any defined restrictions on how rapidly a vehicle can decelerate. In at least some embodiments, the corresponding system deceleration performance limitations are explicitly defined by operating procedures of the subject vehicle, for example. In other embodiments, system deceleration performance limitations may be determined based on one or more contributing hardware components and one or more current vehicle conditions (such as the vehicle's current speed, vehicle weight, battery level, fuel levels where pertinent, deceleration equipment installation such as speed brakes, and the like).

### Example Processes of the Disclosure

Having described example systems and apparatuses, data architectures, and data flows in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally, or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Similarly, it should be appreciated that one or more of the operations of each flowchart may be combinable, replaceable, and/or otherwise altered as described herein.

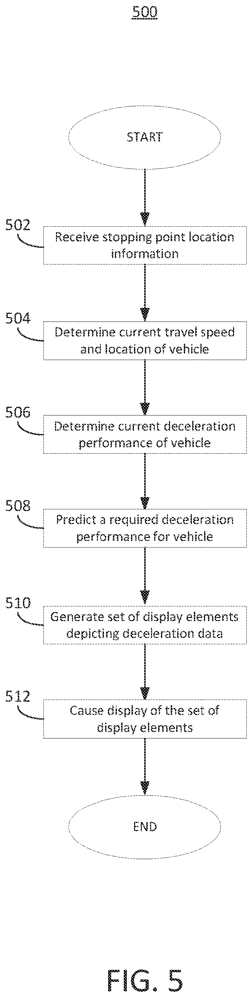

FIG. 5 illustrates a flowchart depicting operations of an example process 500 for generating a deceleration interface in accordance with at least some example embodiments of the present invention. As depicted, process 500 includes receiving (502) stopping point location information, determining (504) current travel speed and location of the vehicle, determining (506) current deceleration performance of the vehicle, predicting (508) a required deceleration performance for the vehicle, generating (510) a set of display elements depicting deceleration data, and causing (512) display of the set of display elements. Process 500 may enable determination and display of pertinent deceleration performance information associated with a subject vehicle and corresponding stopping point.

At step 502, apparatus 200 receives stopping point location information. Receiving (502) stopping point location information may include receiving a travel plan corresponding to the vehicle. In at least some embodiments, the received travel plan may include location information corresponding to a starting point for the vehicle's route and an end point for the vehicle's route. In at least some embodiments, such as those wherein location information for a vehicle's route is provided in a generalized format (such as a location's name), receiving (502) stopping point location information may include determining GPS information corresponding to the received location information. In general, receiving stopping point location information includes determining machine identifiable location information corresponding to a point at which the subject vehicle is intended to complete its route, drop off passengers mid-route, or otherwise stop.

At step 504, apparatus 200 determines a current travel speed and a current location of the vehicle. Determining (504) current travel speed and location of the vehicle may include querying one or more vehicle components to identify the vehicle's current speed and current location. For example, apparatus 200 may be configured to query an airspeed indicator or a speedometer corresponding to the vehicle to determine a current travel speed of the vehicle. In embodiments wherein an HMI of the subject vehicle is configured to aggregate and display various vehicle performance metrics including speed, apparatus 200 may be configured to receive the current speed from such an HMI device or one or more components supporting said display, either automatically or responsive to a query. Apparatus 200 may additionally be configured to query a vehicle location component (GPS enabled component/module, for example) to determine the vehicle's current location. In embodiments wherein an HMI of the subject vehicle is configured to aggregate and display various vehicle components including location information, apparatus 200 may be configured to receive the current speed from such an HMI component or one or more components supporting said display, either automatically or responsive to a query.

At step 506, apparatus 200 determines current deceleration performance of the vehicle. Determining (506) current deceleration performance of the vehicle may include analyzing time series data corresponding to the vehicle's speed to determine at what rate the vehicle's speed is decreasing. In at least some embodiments, such time series data may be available via an airspeed indicator for example, or a corresponding data store configured to store time series data associated with the airspeed indicator. Determining (506) current deceleration performance of the vehicle may include analyzing time series data for a defined period of time preceding the initiation of the deceleration determination. For example, determining (506) current deceleration performance of the vehicle may include determining how the vehicle's speed has decreased over a defined period of seconds or minutes immediately prior to the initiation of the determination. Determining (506) current deceleration performance of the vehicle may include analyzing battery performance corresponding to the defined deceleration period. For example, determining (506) the current deceleration performance may include determining a battery output (or percentage of the battery) which has been required to enable the subject deceleration period.

At step 508, apparatus 200 predicts a required deceleration performance for the vehicle. Predicting (508) a required deceleration performance for the vehicle may include determining a rate of deceleration required for the vehicle to transition from its current speed to a stopping speed by the time it reaches the intended stopping location. In at least some embodiments, determining a required deceleration performance includes determining a raw required deceleration performance required to come to a stop at the intended stopping location, wherein the raw required deceleration performance assumes optimal deceleration conditions pertaining to current vehicle state, weather conditions, and the like. In such embodiments, predicting (508) a required deceleration performance for the vehicle may include calculating an adjustment to the raw required deceleration performance based at least in part on a set of current conditions, such as weather conditions, wind conditions, current vehicle conditions affecting the vehicle's ability to decelerate (such as damage to any systems or physical vehicle components and the like).

At step 510, apparatus 200 generates a set of display elements depicting deceleration data. Generating (510) a set of display elements depicting deceleration data may include generating any of a deceleration performance scale, a required deceleration performance indicator, a deceleration performance indicator, and a system deceleration performance limitations indicator. A deceleration performance scale may be a meter, scale, dial, or other continuum display configured to depict various deceleration performance benchmarks and/or measurements. In at least some embodiments, a deceleration performance scale is a visual indicator configured to depict pertinent metrics associated with notable deceleration benchmarks, measurements, capabilities, and/or limitations.

Predicted deceleration performance indicator may be configured to display a predicted deceleration performance corresponding to the vehicle based at least in part on (i) a set of current vehicle operating conditions, (ii) a set of current external conditions, and (iii) any deceleration limitations/capabilities of the vehicle. In at least some embodiments, a predicted deceleration performance indicator is configured to display a range corresponding to a predicted deceleration performance. The predicted deceleration performance range may be calculated by incorporating a defined margin of error (10%, 5%, etc.) into the determined predicted deceleration performance by depicting the range to include values within the margin of error both above and below the determined predicted deceleration performance. In at least some embodiments, the corresponding margin of error may be calibrated according to a set of current conditions; for example, a predicted deceleration performance range corresponding to a vehicle operating under suboptimal weather conditions may be assigned a larger margin of error than the same vehicle would be assigned under normal weather conditions. Similarly, an older (or otherwise less reliable) vehicle may be assigned a larger margin of error than a newer vehicle.

A required deceleration performance indicator may be configured to indicate a required deceleration performance to reach an intended stopping point. In at least some embodiments, a required deceleration performance indicator is configured to (i) determine a distance from the vehicle's current location to a stopping point location, (ii) determine a current travel speed of the vehicle, and (iii) determine a required deceleration performance for the vehicle to stop by the stopping point location. In at least some embodiments, such as those where uniform deceleration is desired, the required deceleration performance for the vehicle is determined as an average across the estimated remaining distance to the stopping point. In other embodiments, such as those where deceleration to a defined slower speed before reaching a point prior to the stopping point is required, deceleration is determined as an average across the remaining distance to that predefined point, after which a secondary required deceleration may be required. Such an embodiment may be beneficial in environments wherein the last section of a vehicle's travel occurs in a congested area, for example, and therefore decreasing speed to a considerably slowed rate prior to the stopping point may be prudent.

In at least some embodiments, a system deceleration performance limitations indicator may be an indicator configured to depict any defined restrictions on how rapidly a vehicle can decelerate. In at least some embodiments, the corresponding system deceleration performance limitations are explicitly defined by operating procedures of the subject vehicle, for example. In other embodiments, system deceleration performance limitations may be determined based on one or more contributing hardware components and one or more current vehicle conditions (such as the vehicle's current speed, vehicle weight, battery level, fuel levels where pertinent, and the like).

At step 512, apparatus 200 causes display of the set of display elements. Causing (512) display of the set of display elements may include displaying the generated set of elements as an overlay on an existing operator display. In at least some embodiments, apparatus 200 is configured to display the set of display elements concurrently with any number of additional display elements configured to display current operational metrics/conditions to an operator of the vehicle.

In at least some embodiments, process 500 may additionally include executing a comparison between the system deceleration performance limitations and the required deceleration performance to reach an intended stopping point. In embodiments where the system deceleration performance limitations render the required deceleration performance unachievable (in other words, wherein the required deceleration exceeds the current capabilities of the subject vehicle), apparatus 200 may be configured to trigger one or more alerts. In at least some embodiments, apparatus 200 is configured to trigger an alert to one or more ground operators and/or offboard crew members, alerting said operator and/or crew members of the vehicle's inability to stop at the intended stopping point. In at least some embodiments, the generated alert comprises an audio alert alerting the operator and/or crew members of the vehicle's inability to stop at the intended stopping point. In at least some embodiments, the generated alert comprises a visual alert alerting the operator and/or crew members of the vehicle's inability to stop at the intended stopping point. Such a visual alert may include identifying information for the vehicle, as well as one or more interface options for triggering one or more go-around functions. A go-around function may include an instruction directing the subject vehicle to divert course or otherwise change course to accommodate the current limitations of the vehicle. In at least some embodiments, a defined go-around function may be automatically triggered by the apparatus 200 responsive to determining the subject vehicle cannot achieve the required deceleration performance.

In at least some embodiments, process 500 may additionally include dynamically updating the generated set of display elements responsive to detecting a change in the current travel speed of the vehicle or a current deceleration performance of the vehicle.

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random-access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method for displaying vehicle performance metrics, the computer-implemented method comprising:
receiving location information corresponding to an intended stopping point for a vehicle;
determining a current travel speed and a current location of the vehicle;
determining a current deceleration performance based at least in part on (i) the current travel speed of the vehicle, (ii) the current location of the vehicle, and (iii) one or more vehicle deceleration capabilities corresponding to the vehicle;
predicting a required deceleration performance associated with stopping the vehicle at the intended stopping point;
generating a set of display elements comprising (i) a first display element indicating the required deceleration performance, (ii) a second display element indicating the current deceleration performance, and (iii) a third display element indicating the one or more vehicle deceleration capabilities relative to the required deceleration performance; and
causing display of the set of display elements via an operator interface.

2. The computer-implemented method of claim 1, further comprising:
detecting that the required deceleration performance exceeds the one or more vehicle deceleration capabilities; and
responsive to detecting that the required deceleration performance exceeds the one or more vehicle deceleration capabilities, generating one or more alerts.

3. The computer-implemented method of claim 2, wherein the one or more alerts comprise an audio alert.

4. The computer-implemented method of claim 2, wherein the one or more alerts comprise a visual alerts.

5. The computer-implemented method of claim 2, further comprising:
responsive to detecting that the required deceleration performance exceeds the one or more vehicle deceleration capabilities, automatically triggering one or more go-around functions.

6. The computer-implemented method of claim 1, wherein the set of display elements further comprises an element indicating a scale for indicating deceleration performance.

7. The computer-implemented method of claim 1, further comprising dynamically updating the set of display elements responsive to detecting a change in the current travel speed corresponding to the vehicle or the current deceleration performance.

8. A system comprising:
at least one processor; and
at least one non-transitory computer-readable storage medium having computer program code stored thereon that, in execution with the at least one processor, is configured to execute operations comprising:
receiving location information corresponding to an intended stopping point for a vehicle; determining a current travel speed and a current location of the vehicle;
determining a current deceleration performance based at least in part on (i) the current travel speed of the vehicle, (ii) the current location of the vehicle, and (iii) one or more vehicle deceleration capabilities corresponding to the vehicle;
predicting a required deceleration performance associated with stopping the vehicle at the intended stopping point;
generating a set of display elements comprising (i) a first display element indicating the required deceleration performance, (ii) a second display element indicating the current deceleration performance, and (iii) a third display element indicating the one or more vehicle deceleration capabilities relative to the required deceleration performance; and
causing display of the set of display elements via an operator interface.

9. The system of claim 8, the operations further comprising:
detecting that the required deceleration performance exceeds the one or more vehicle deceleration capabilities; and
responsive to detecting that the required deceleration performance exceeds the one or more vehicle deceleration capabilities, generating one or more alerts.

10. The system of claim 9, wherein the one or more alerts comprise an audio alert.

11. The system of claim 9, wherein the one or more alerts comprise a visual alert.

12. The system of claim 9, the operations further comprising:
responsive to detecting that the required deceleration performance exceeds the one or more vehicle deceleration capabilities, automatically triggering one or more go-around functions.

13. The system of claim 8, wherein the set of display elements further comprises an element indicating a scale for indicating deceleration performance.

14. The system of claim 8, the operations further comprising:
dynamically updating the set of display elements responsive to detecting a change in the current travel speed corresponding to the vehicle or the current deceleration performance.

15. A computer program product comprising at least one non-transitory computer-readable storage medium having computer program code stored thereon that, in execution with at least one processor, is configured to execute operations comprising:
receiving location information corresponding to an intended stopping point for a vehicle; determining a current travel speed and a current location of the vehicle;
determining a current deceleration performance based at least in part on (i) the current travel speed of the vehicle, (ii) the current location of the vehicle, and (iii) one or more vehicle deceleration capabilities corresponding to the vehicle;
predicting a required deceleration performance associated with stopping the vehicle at the intended stopping point;
generating a set of display elements comprising (i) a first display element indicating the required deceleration performance, (ii) a second display element indicating the current deceleration performance, and (iii) a third display element indicating the one or more vehicle deceleration capabilities relative to the required deceleration performance; and
causing display of the set of display elements via an operator interface.
